(19) Europäisches Patentamt / European Patent Office / Office européen des brevets

(11) **EP 4 218 453 B1**

(12) **EUROPEAN PATENT SPECIFICATION**

(45) Date of publication and mention
of the grant of the patent:
**24.04.2024 Bulletin 2024/17**

(21) Application number: **20954595.3**

(22) Date of filing: **25.09.2020**

(51) International Patent Classification (IPC):
*A24F 40/50* (2020.01)    *A24F 40/40* (2020.01)

(52) Cooperative Patent Classification (CPC):
**A24F 40/50;** Y02E 60/10

(86) International application number:
**PCT/CN2020/117847**

(87) International publication number:
**WO 2022/061743 (31.03.2022 Gazette 2022/13)**

(54) **BATTERY ROD, ATOMIZER, AND ELECTRONIC ATOMIZATION DEVICE**

BATTERIESTAB, ZERSTÄUBER UND ELEKTRONISCHE ZERSTÄUBUNGSVORRICHTUNG

TIGE DE BATTERIE, ATOMISEUR ET DISPOSITIF D'ATOMISATION ÉLECTRONIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**02.08.2023 Bulletin 2023/31**

(73) Proprietor: **Shenzhen Smoore Technology Limited
Shenzhen, Guangdong 518102 (CN)**

(72) Inventors:
• **ZHAO, Bosong
Shenzhen, Guangdong 518102 (CN)**
• **DONG, Wenjie
Shenzhen, Guangdong 518102 (CN)**
• **FANG, Weiming
Shenzhen, Guangdong 518102 (CN)**

(74) Representative: **Herrero & Asociados, S.L.
Edificio Aqua - Agustín de Foxá, 4-10
28036 Madrid (ES)**

(56) References cited:
CN-A- 104 037 719    CN-A- 104 432 534
CN-A- 109 283 867    CN-A- 109 393 573
CN-A- 110 959 917    US-A1- 2019 008 208

**Description**

**TECHNICAL FIELD**

The present disclosure relates to the field of atomization technologies, and in particular, to a battery rod, an atomizer, and an electronic atomizing device.

**BACKGROUND**

In some existing electronic atomizing devices with an encryption function, a circuit board is arranged in an atomizer of the electronic atomizing device, and a microcontroller unit (MCU), a capacitor, and a metal oxide semiconductor (MOS) transistor switch are arranged on the circuit board to realize the encryption function. The capacitor is configured to supply power to the MCU, and the MCU realizes communication with the battery rod by controlling turn-on and turn-off of the MOS transistor switch, that is, the MCU feeds back data 1 and data 0 to the battery rod.

In an actual application process, the existing electronic atomizing device generally requires a high-power MOS transistor and/or a large-capacity capacitor to operate normally, but the high-power MOS transistor and the large-capacity capacitor are generally large in size. As a result, the area of the circuit board may be significantly increased, which limits the application of the encryption function to small-scale atomizers.

An electronic atomizer device including a battery rod and an atomizer which send and receive communications signals when connected is known for example from patent document CN 104432534 A

**SUMMARY**

The present disclosure provides a battery rod, an atomizer, and an electronic atomizing device, which can reduce the power of a control switch in the atomizer, thereby further reducing the size of a circuit board of the atomizer and the costs.

To resolve the foregoing technical problem, a first technical solution provided by the present disclosure is as follows. A battery rod is provided and includes a first connecting end, a second connecting end, and a control chip. The first connecting end and the second connecting end are configured to be connected to an atomizer inserted into the battery rod. The control chip is connected to the first connecting end, and configured to send a first communication signal to the atomizer inserted into the battery rod through the first connecting end, and receive a second communication signal from the atomizer through the first connecting end, and realize communication between the battery rod and the atomizer, the first communication signal includes a first level signal as a logic high level and a second level signal as a logic low level; and the second communication signal includes a third level signal as a logic high level and a fourth level signal as a logic low level, and the voltage difference between the first level signal and the second level signal is greater than the voltage difference between the third level signal and the fourth level signal.

In some embodiments, the battery rod further includes a cell configured to provide a battery voltage and a first switch including a first path end, a second path end, and a first control end. The first path end is connected to the cell and the second path end is connected to the first connecting end. The control chip includes a power control pin connected to the first control end to control turn-on and turn-off of the first switch. When the first switch is turned on, the cell outputs the first level signal at the first connecting end through the first switch that is turned on. When the first switch is turned off, the battery rod outputs the second level signal at the first connecting end, and sends the first communication signal to the atomizer through the first connecting end.

In some embodiments, the control chip further includes a detection pin connected to the first connecting end to detect a voltage on the first connecting end. The control chip identifies and determines the second communication signal based on the voltage detected by the detection pin.

In some embodiments, when the battery rod receives the second communication signal from the atomizer, the first switch is turned on, and the cell outputs the first level signal at the first connecting end through the first switch that is turned on. When the atomizer operates in a first state, the voltage on the first connecting end is maintained at the first level signal, the detection pin detects the third level signal in the second communication signal, and the third level signal is equal to the first level signal. When the atomizer operates in a second state, the voltage on the first connecting end is reduced to the fourth level signal, the detection pin detects the fourth level signal in the second communication signal, and the fourth level signal is greater than the second level signal and less than the first level signal.

In some embodiments, the difference between the voltage on the first connecting end when the atomizer operates in the first state and the voltage on the first connecting end when the atomizer operates in the second state is larger than 0 and less than or equal to 1.2V.

In some embodiments, the battery rod further includes: a current-limiting circuit, configured to be connected to the first connecting end to output the third level signal at the first connecting end when receiving the second communication signal from the atomizer; when the atomizer operates in the first state, the voltage on the first connecting end is maintained at the third level signal, the detection pin detects the third level signal in the second communication signal, and the third level signal is greater than the second level signal and less than the first level signal; and when the atomizer operates in the second state, the voltage on the first connecting end is reduced to the fourth level signal, the detection pin detects the fourth level signal in the second communication signal, and the fourth level signal is equal to the second level signal.

In some embodiments, the current-limiting circuit includes a second switch, including a third path end, a fourth path end, and a second control end, the third path end connected to the cell to receive the battery voltage; and a current-limiting resistor is arranged between the fourth path end of the second switch and the first connecting end. The control chip further includes a current-limiting control pin connected to the second control end to control turn-on of the second switch. When the battery rod receives the second communication signal from the atomizer, the control chip controls the second switch to be turned on through the current-limiting control pin to output the third level signal at the first connecting end.

In some embodiments, the control chip further includes a signal sampling circuit connected to the detection pin and receiving a voltage reference to identify and determine the second communication signal based on the voltage reference.

The control chip further includes a voltage reference pin configured to receive the voltage reference; and the battery rod further includes: a voltage reference providing circuit, arranged between the voltage reference pin and the first connecting end to generate the voltage reference by using the third level signal on the first connecting end, the voltage reference is less than the third level signal and greater than the fourth level signal.

To resolve the foregoing technical problem, a second technical solution provided by the present disclosure is as follows: An atomizer is provided and includes a third connecting end and a fourth connecting end configured to be connected to a battery rod when the atomizer is inserted into the battery rod, and a processing chip connected to the third connecting end, and configured to receive a first communication signal from the battery rod through the third connecting end and send a second communication signal to the battery rod through the third connecting end, and realize communication between the battery rod and the atomizer. The first communication signal includes a first level signal as a logic high level and a second level signal as a logic low level, and the second communication signal includes a third level signal as a logic high level and a fourth level signal as a logic low level. The voltage difference between the first level signal and the second level signal is greater than the voltage difference between the third level signal and the fourth level signal.

In some embodiments, the atomizer further includes a heating element, a control switch. and a controllable resistor. The control switch and the controllable resistor are connected in series and are connected in parallel with the heating element between the third connecting end and the fourth connecting end, and the control switch receives a control signal of the processing chip to be in a turn-on state or a turn-off state; when the control switch is in the turn-off state, the atomizer operates in a first state, the voltage on the third connecting end is maintained at the third level signal, and the third level signal is equal to the first level signal; and when the control switch is in the turn-on state, the atomizer operates in a second state, the voltage on the third connecting end is reduced to the fourth level signal, and the fourth level signal is greater than the second level signal and less than the first level signal.

In some embodiments, the atomizer further includes a diode and a capacitor. The processing chip comprises a voltage pin and a pin; the cathode of the diode is connected to the voltage pin, and the anode of the diode is connected to the pin; a first end of the capacitor is connected to the cathode, and a second end of the capacitor is connected to the fourth connecting end. The control switch, the controllable resistor, the diode, and the capacitor are integrated into the processing chip.

In some embodiments, the atomizer further includes a heating element and a control switch. The control switch and the heating element are connected in parallel between the third connecting end and the fourth connecting end, and the control switch receives a control signal of the processing chip to be in a turn-on state or a turn-off state. When the control switch is in the turn-off state, the voltage on the third connecting end is maintained at the third level signal, and the third level signal is greater than the second level signal and less than the first level signal. When the control switch is in the turn-on state, the voltage on the third connecting end is reduced to the fourth level signal, and the fourth level signal is equal to the second level signal.

In some embodiments, the atomizer further includes a diode and a capacitor. The processing chip comprises a voltage pin and a pin; the cathode of the diode is connected to the voltage pin, and the anode of the diode is connected to the pin; a first end of the capacitor is connected to the cathode, and a second end of the capacitor is connected to the fourth connecting end. The control switch, the diode, and the capacitor are integrated into the processing chip.

To resolve the foregoing technical problem, a third technical solution provided by the present disclosure is as follows. An electronic atomizing device is provided and includes any one of the battery rods mentioned above and any one of the atomizers mentioned above.

Technical effects of the present disclosure are as follows. The battery rod, the atomizer, and the electronic atomizing device provided in the present disclosure, different from the related art, when communication identification is performed, the voltage difference between the first level signal and the second level signal that are sent to the atomizer by the battery rod is greater than the voltage difference between the third level signal and the fourth level signal that are fed back by the atomizer to the battery rod, so as to reduce the power of the control switch in the atomizer, thereby further reducing the size of the circuit board of the atomizer and the costs.

## BRIEF DESCRIPTION OF THE DRAWINGS

FIG. 1 is a schematic diagram of functional modules of a first embodiment of a battery rod according to the present disclosure.

FIG. 2 is a schematic structural diagram of a specific embodiment of the battery rod shown in FIG. 1.

FIG. 3 is a schematic structural diagram of a first embodiment of an atomizer according to the present disclosure.

FIG. 4 is a schematic structural diagram of an embodiment of an electronic atomizing device formed by inserting the atomizer shown in FIG. 3 into the battery rod shown in FIG. 2.

FIG. 5 is a time sequence waveform diagram when the electronic atomizing device shown in FIG. 4 performs communication identification.

FIG. 6 is a schematic diagram of functional modules of a second embodiment of a battery rod according to the present disclosure.

FIG. 7 is a schematic structural diagram of a specific embodiment of the battery rod shown in FIG. 6.

FIG. 8 is a schematic structural diagram of a second embodiment of an atomizer according to the present disclosure.

FIG. 9 is a schematic structural diagram of an embodiment of an electronic atomizing device formed by inserting the atomizer shown in FIG. 8 into the battery rod shown in FIG. 7.

FIG. 10 is a time sequence waveform diagram of the electronic atomizing device shown in FIG. 9 performing communication identification.

## DETAILED DESCRIPTION

The following clearly and completely describes the technical solutions in embodiments of the present disclosure with reference to the accompanying drawings in the embodiments of the present disclosure. Apparently, the described embodiments are merely some but not all of the embodiments of the present disclosure. All other embodiments obtained by a person of ordinary skill in the art based on the embodiments of the present disclosure without creative efforts shall fall within the protection scope of the present disclosure.

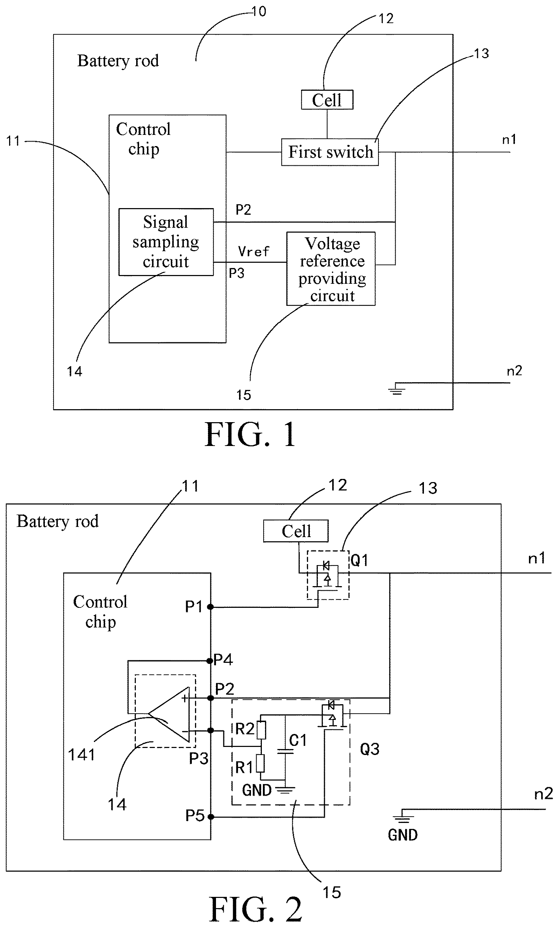

FIG. 1 is a schematic diagram of functional modules of a first embodiment of a battery rod according to the present disclosure. In some embodiments, the battery rod 10 includes a first connecting end n1 and a second connecting end n2 configured to be connected to an atomizer inserted into the battery rod 10. The battery rod 10 further includes a control chip 11 connected to the first connecting end n1, so as to send a first communication signal to the atomizer inserted into the battery rod 10 and receive a second communication signal from the atomizer, thereby realize communication between the battery rod 10 and the atomizer. The second connecting end n2 is grounded. In some embodiments, the control chip 11 includes a power supply control pin P1.

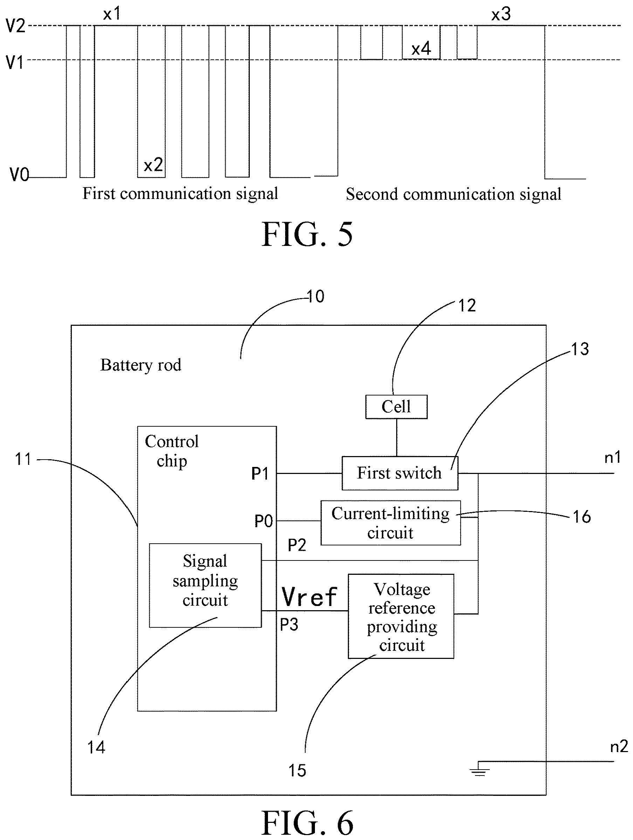

In some embodiments, referring to FIG. 5, the first communication signal includes a first level signal x1 as a logic high level and a second level signal x2 as a logic low level. The second communication signal includes a third level signal x3 as a logic high level and a fourth level signal x4 as a logic low level. In some embodiments, the voltage value of the first level signal x1 is V2, the voltage value of the second level signal x2 is V0, the voltage value of the third level signal x3 is V2, and the voltage value of the fourth level signal x4 is V1. The voltage difference (V2-V0) between the voltage value V2 of the first level signal x1 and the voltage value V0 of the second level signal x2 is greater than the voltage difference (V2-V1) between the voltage value V2 of the third level signal x3 and the voltage value V1 of the fourth level signal x4.

In some embodiments, the battery rod 10 further includes a cell 12 and a switch 13, and the cell 12 is configured to provide the battery voltage Vbat. When the switch 13 is turned on, the cell 12 outputs the first level signal x1 at the first connecting end n1 through the switch 13 that is turned on; and when the switch 13 is turned off, the battery rod 10 outputs the second level signal x2 at the first connecting end n1 to send the first communication signal to the atomizer through the first connecting end n1. In some embodiments, data "1" is sent when the first level signal x1 is outputted, and data "0" is sent when the second level signal x2 is outputted.

In some embodiments, as shown in FIG. 2, the switch 13 includes a first switch Q1, and the first switch Q1 includes a first path end, a second path end, and a first control end. The first path end of the first switch Q1 is connected to the cell 12, the second path end is connected to the first connecting end n1, and the first control end of the first switch Q1 is connected to the power supply control pin P1. In some embodiments, the power supply control pin P1 is configured to control turn-on or turn-off of the first switch Q1.

In some embodiments, the control chip 11 further includes a detection pin P2 and a voltage reference pin P3. The detection pin P2 is connected to the first connecting end n1 to detect the voltage on the first connecting end n1. In some embodiments, the control chip 11 identifies and determines the second communication signal based on the voltage detected by the detection pin P2, and then determines that data received by the battery rod 10 is "1" or "0". In some embodiments, the control chip 11 further includes a signal sampling circuit 14 connected to the detection pin P2 to detect and obtain the voltage fed back by the atomizer to the first connecting end n1 through the detection pin P2. The signal sampling circuit 14 is also connected to the voltage reference pin P3 to receive the voltage reference Vref, so as to identify and determine that the voltage fed back by the atomizer to the first connecting end n1 is the third level signal x3 or the fourth level signal x4 according to the voltage reference Vref.

The battery rod 10 further includes a voltage reference providing circuit 15 arranged between the voltage reference pin P3 and the first connecting end n1. That is, the voltage reference providing circuit 15 is connected between the voltage reference pin P3 and the first connecting end n1 to generate the voltage reference Vref by using the third level signal x3 on the first connecting end n1. The voltage reference Vref is less than the voltage value V2 of the third level signal x3 or the first level signal x1, and is greater than the voltage value V1 of the fourth level signal x4.

Referring to FIG. 2, the signal sampling circuit 14 includes a comparator 141. In some embodiments, the comparator 141 includes a first input end, a second input end, and an output end. The first input end is connected to the detection pin P2 to detect the voltage fed back by the atomizer to the first connecting end n1, the second input end is connected to the voltage reference pin P3 to receive the voltage reference Vref, and the output end is connected to a pin P4 of the control chip to output a result corresponding to the identified and determined second communication signal. In some embodiments, the comparator 141 may also be an amplification circuit built by an analog-to-digital converter, an operational amplifier, a triode, a MOS transistor, or the like. In some embodiments, the signal sampling circuit 14 may also be arranged outside the control chip 11. After identifying and determining that the voltage fed back by the atomizer to the first connecting end n1 is the third level signal x3 or the fourth level signal x4, the feedback result is transmitted to the control chip 11 for further processing by the control chip 11.

The voltage reference providing circuit 15 includes a third switch Q3, a first resistor R1, a second resistor R2, and a first capacitor C1. The third switch Q3 includes a fifth path end, a sixth path end, and a third control end. The fifth path end of the third switch Q3 is connected to the first connecting end n1, the third control end is connected to a pin P5 of the control chip 11, and the pin P5 of the control chip 11 controls turn-off and turn-on of the third switch Q3. A first end of the second resistor R2 is connected to the sixth path end of the third switch Q3. A first end of the first resistor R1 is connected to a second end of the second resistor R2, and a second end of the first resistor R1 is grounded. A first end of the first capacitor C1 is connected to the first end of the second resistor R2, and a second end of the first capacitor C1 is grounded.

In some embodiments, when the atomizer operates in a first state, the voltage on the first connecting end n1 is maintained at the first level signal x1, the detection pin P2 detects the third level signal x3 in the second communication signal, that is, the battery rod 10 obtains the data "1", and the voltage value of the third level signal x3 is equal to the voltage value of the first level signal x1, that is, the voltage value V2. When the atomizer operates in a second state, the voltage on the first connecting end n1 is reduced from the first level signal x1 to the fourth level signal x4, the detection pin P2 detects the fourth level signal x4 in the second communication signal, that is, the battery rod 10 obtains the data "0", and the voltage value V1 of the fourth level signal x4 is greater than the voltage value V0 of the second level signal x2 and less than the voltage value V2 of the first level signal x1.

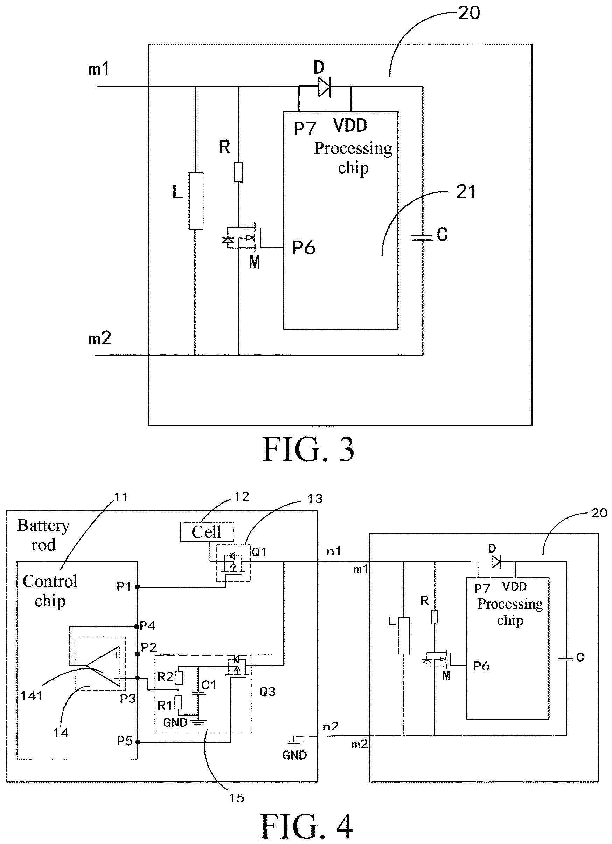

FIG. 3 is a schematic structural diagram of a first embodiment of an atomizer according to the present disclosure. In some embodiments, the atomizer 20 includes a third connecting end m1 and a fourth connecting end m2, configured to be connected to a first connecting end n1 and a second connecting end n2 of a battery rod 10 respectively when the atomizer 20 is inserted into the battery rod 10.

The atomizer 20 includes a processing chip 21 connected to the third connecting end m1 to receive a first communication signal from the battery rod 10 and send a second communication signal to the battery rod 10 through the third connecting end m1, thereby realizing communication between the battery rod 10 and the atomizer 20.

In some embodiments, referring to FIG. 5, the first communication signal includes a first level signal x1 as a logic high level and a second level signal x2 as a logic low level, and the second communication signal includes a third level signal x3 as a logic high level and a fourth level signal x4 as a logic low level. In some embodiments, the voltage value of the first level signal x1 is V2, the voltage value of the second level signal x2 is V0, the voltage value of the third level signal x3 is V2, and the voltage value of the fourth level signal x4 is V1. The voltage difference (V2-V0) between the voltage value V2 of the first level signal x1 and the voltage value V0 of the second level signal x2 is greater than the voltage difference (V2-V1) between the voltage value V2 of the third level signal x3 and the voltage value V1 of the fourth level signal x4.

In some embodiments, the atomizer 20 further includes a heating element L, a control switch M, and a controllable resistor R. The control switch M and the controllable resistor R are connected in series, and are connected in parallel with the heating element L between the third connecting end m1 and the fourth connecting end m2. The control switch M receives a control signal of the processing chip 21 to be in a turn-on state or a turn-off state. When the control switch M is in the turn-off state, the atomizer 20 operates in a first state, the voltage on the third connecting end m1 is maintained at the third level signal x3, and the voltage value of the third level signal x3 is equal to the voltage value of the first level signal x1, that is, the voltage value V2. When the control switch M is in the turn-on state, the atomizer 20 operates in a second state, the voltage on the third connecting end m1 is reduced from the voltage value V2 corresponding to the first level signal x1 to the voltage value V1 corresponding to the fourth level signal x4, and the voltage value V1 of the fourth level signal x4 is greater than the voltage value V0 of the second level signal x2 and less than the voltage value V2 of the first level signal x1, as shown in FIG. 5.

In some embodiments, the control switch M includes a seventh path end, a eighth path end, and a fourth control end. The fourth control end of the control switch M is connected to a pin P6 of the processing chip 21, and is configured to receive a driving signal to be in the turn-on state or the turn-off state according to the driving signal. A second end of the controllable resistor R is connected to the seventh path end of the control switch M, a first end of the controllable resistor R is connected to a first end of the heating element L, and a second end of the heating element L is connected to the eighth path end of the control switch M and the fourth connecting end m2.

In some embodiments, the atomizer 20 further includes a diode D, the cathode of the diode D is connected to a voltage pin VDD of the processing chip 21, and the anode of the diode D is connected to a pin P7 of the processing chip 21. In some embodiments, the diode D may also be a metal oxide semiconductor field effect transistor (MOSFET), a triode, or the like. In some embodiments, the atomizer 20 further includes a capacitor C, a first end of the capacitor C is connected to the cathode of the diode D, and a second end of the capacitor C is connected to the fourth connecting end m2.

In some embodiments, the voltage value V2 of the first level signal x1 ranges from VDD to Vbat, VDD is the minimum operating voltage of the processing chip 21 and Vbat is a battery voltage. In some embodiments, the voltage value V1 of the fourth level signal x4 ranges from VDD to Vbat, the voltage value V0 of the second level signal x2 ranges from 0 to 0.3*VDD. The voltage value V2 of the first level signal x1 is greater than the voltage value V1 of the fourth level signal x4, and the voltage value V1 of the fourth level signal x4 is greater than the voltage value V0 of the second level signal x2, VDD (the voltage at which the processing chip 21 may operate normally) is less than or equal to the Vbat (the battery voltage).

During a process that the atomizer 20 feeds back data, the voltage value V1 of the fourth level signal x4 is always greater than the minimum operating voltage VDD of the processing chip 21 and may supply power to the processing chip 21. Therefore, the capacitance of capacitor C of the processing chip 21 may be reduced or even canceled to reduce the size and costs of a circuit board of the atomizer 20. Further, the control switch M, the controllable resistor R, the diode D, and the capacitor C may be integrated into the processing chip 21 to further reduce the costs.

When the control switch M is in the turn-off state, the atomizer 20 operates in the first state, the voltage on the third connecting end m1 is maintained at the third level signal x3, and the third level signal x3 is equal to the first level signal x1. When the control switch M is in the turn-on state, the atomizer 20 operates in the second state, the voltage on the third connecting end m1 is reduced to the fourth level signal x4, and the voltage value V1 of the fourth level signal x4 is greater than the voltage value V0 of the second level signal x2 and less than the voltage value V2 of the first level signal x1.

As shown in FIG. 4, FIG. 4 is a schematic structural diagram of an embodiment of an electronic atomizing device formed by inserting the atomizer shown in FIG. 3 into the battery rod shown in FIG. 2. The atomizer 20 is inserted into the battery rod 10 to form the electronic atomizing device. In some embodiments, when the atomizer 20 is inserted into the battery rod 10, the third connecting end m1 of the atomizer 20 is connected to the first connecting end n1 of the battery rod 10, and the fourth connecting end m2 of the atomizer 20 is connected to the second connecting end n2 of the battery rod 10. In another embodiment, when the atomizer 20 is inserted into the battery rod 10, the third connecting end m1 of the atomizer 20 may also be connected to the second connecting end n2 of the battery rod 10, and the fourth connecting end m2 of the atomizer 20 may be connected to the first connecting end n1 of the battery rod 10. This embodiment is illustrated in detail by using an example in which the third connecting end m1 of the atomizer 20 is connected to the first connecting end n1 of the battery rod 10, and the fourth connecting end m2 of the atomizer 20 is connected to the second connecting end n2 of the battery rod 10.

In some embodiments, referring to FIG. 5, FIG. 5 is a time sequence waveform diagram when the battery rod and the atomizer in the electronic atomizing device shown in FIG. 4 communicate with each other. When the atomizer 20 is inserted into the battery rod 10, the battery rod 10 sends the first communication signal to the atomizer 20. In some embodiments, the power supply control pin P1 of the battery rod 10 controls the first switch Q1 to be turned on, and the cell 12 outputs the first level signal x1 (that is, sending the data "1") at the first connecting end n1 through the first switch Q1 that is turned on, or the power supply control pin P1 of the battery rod 10 controls the first switch Q1 to be turned off, and the cell 12 outputs the second level signal x2 (that is, sending the data "0") at the first connecting end n1 through the first switch Q1 that is turned off.

In some embodiments, after receiving the first communication signal, the atomizer 20 sends the second communication signal to the battery rod 10. In some embodiments, the third level signal x3 or the fourth level signal x4 is provided for the battery rod 10 by turn-on or turn-off of the controllable resistor R.

In some embodiments, the atomizer 20 operates in the first state when the processing chip 21 controls the controllable switch M to be in the turn-off state. When the atomizer 20 operates in the first state, the voltage on the third connecting end m1 is maintained at the first level signal x1. Because the voltage value of the third level signal x3 is equal to the voltage value of the first level signal x1, that is, the voltage value V2, the detection pin P2 detects the third level signal x3 in the second communication signal, in this way, the battery rod 10 obtains the data " 1" fed back by the atomizer 20.

The atomizer 20 operates in the second state when the processing chip 21 controls the controllable switch M to be in the turn-on state. When the atomizer 20 operates in the second state, the voltage on the third connecting end m1 is reduced to the fourth level signal x4, and the voltage value V1 of the fourth level signal x4 is greater than the voltage value V0 of the second level signal x2 and less than the voltage value V2 of the first level signal x1, in this way, the battery rod 10 obtains the data "0" fed back by the atomizer 20. In some embodiments, when the controllable switch M is in the turn-on state, the internal resistance of the cell 12, the internal resistance of the first switch Q1, and the controllable resistor R form a voltage divider circuit, and the first level signal x1 on the third connecting end m1 is then reduced to the fourth level signal x4, in this way, the battery rod 10 obtains the data "0".

In some embodiments, when the detection pin P2 of the control chip 11 detects the third level signal x3 or the fourth level signal x4, the comparator 141 is configured to compare the third level signal x3 or the fourth level signal x4 with the voltage reference Vref, so as to determine that the received data is "1" or "0". In some embodiments, the voltage value of the voltage reference Vref is greater than the voltage value V1 of the fourth level signal x4 and less than the voltage value V2 of the first level signal x1 or the third level signal x3. Thus, when the voltage obtained through sampling by the detection pin P2 is greater than the voltage reference Vref, it may be determined that the detection pin P2 detects the third level signal x3, that is, the battery rod 10 receives the data " 1"; and when the voltage obtained through sampling by the detection pin P2 is less than the voltage reference Vref, it may be determined that the detection pin P2 detects the fourth level signal x4, that is, the battery rod 10 receives the data "0".

In some embodiments, the voltage of the voltage reference Vref may be obtained directly from the first level signal x1 applied to the heating element L. After the first capacitor C1 is fully charged, the third switch Q3 is turned off, and the voltage reference Vref may remain stable for a period of time. In other embodiments, the voltage of the voltage reference Vref may also be obtained from a digital-to-analog converter of the control chip 11, or may be obtained from the battery voltage Vbat, which is not specifically limited herein.

In some embodiments, the difference between the voltage (Vbat*Rh/(Re+Rh)) on the first connecting end n1 when the atomizer 20 operates in the first state and the voltage (Vbat*Rp/(Re+Rp)) on the first connecting end n1 when the atomizer operates in the second state is larger than 0 and less than or equal to 1.2V. That is:

$$0 < \frac{Vbat * Rh}{Re + Rh} - \frac{Vbat * Rp}{Re + Rp} \leq 1.2 ;$$

Vbat is the battery voltage, Re is a sum of the internal resistance of the battery 12 and the internal resistance of the first switch Q1 that is turned on, Rh is a resistance of the heating element L, and Rp is the resistance of the controllable resistor R and the heating element L that are connected in parallel. In some embodiments, the resistance range of the controllable resistor R may be determined through the foregoing formula.

In the electronic atomizing device including the atomizer and the battery rod of this embodiment, the controllable resistor R is arranged in the atomizer 20. When the controllable switch M is turned on, the controllable resistor R may form a voltage divider circuit with the internal resistance of the cell 12 and the internal resistance of the first switch Q1 that is turned on to reduce the voltage on the first connecting end n1 from the first level signal x1 to the fourth level signal x4. Therefore, the voltage difference (V2-V0) between the first level signal x1 and the second level signal x2 is greater than the voltage difference (V2-V1) between the third level signal x3 and the fourth level signal x4, and the current flowing through the control switch M is further reduced. In this way, the power of the control switch M may be reduced, thereby reducing the size of the control switch M and reducing the size and the costs of the circuit board of the atomizer 20.

As shown in FIG. 6, FIG. 6 is a schematic diagram of functional modules of a second embodiment of a battery rod according to the present disclosure. Compared with the foregoing first embodiment shown in FIG. 1, a difference is that this embodiment further includes a current-limiting circuit 16 connected to the first connecting end n1 to output a third level signal at the first connecting end n1 when receiving the second communication signal from the atomizer 20.

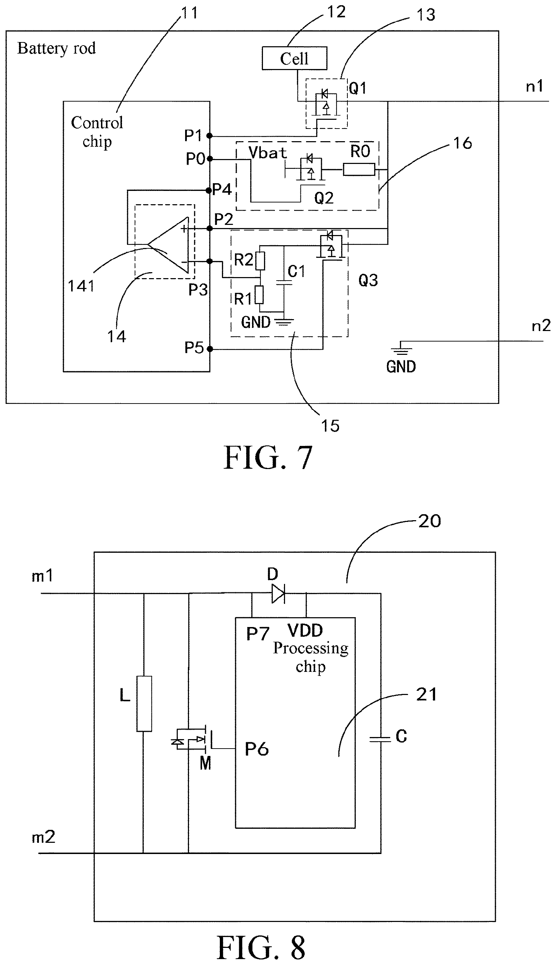

In some embodiments, referring to FIG. 7, the current-limiting circuit 16 includes a second switch Q2 and a current-limiting resistor R0. The second switch Q2 includes a third path end, a fourth path end, and a second control end. The third path end of the second switch Q2 is connected to the cell 12 to receive the battery voltage Vbat, and the current-limiting resistor R0 is arranged between the fourth path end of the second switch Q1 and the first connecting end n1. In some embodiments, the current-limiting resistor R0 connects the fourth path end of the second switch Q2 with the first connecting end n1. The control chip 11 further includes a current-limiting control pin P0 connected to the second control end of the second switch Q2 to control turn-on of the second switch Q2. When the battery rod 10 receives the second communication signal from the atomizer 20, the control chip

11 controls the second switch Q2 to be turned on through the current-limiting control pin P0, so as to output the third level signal at the first connecting end n1.

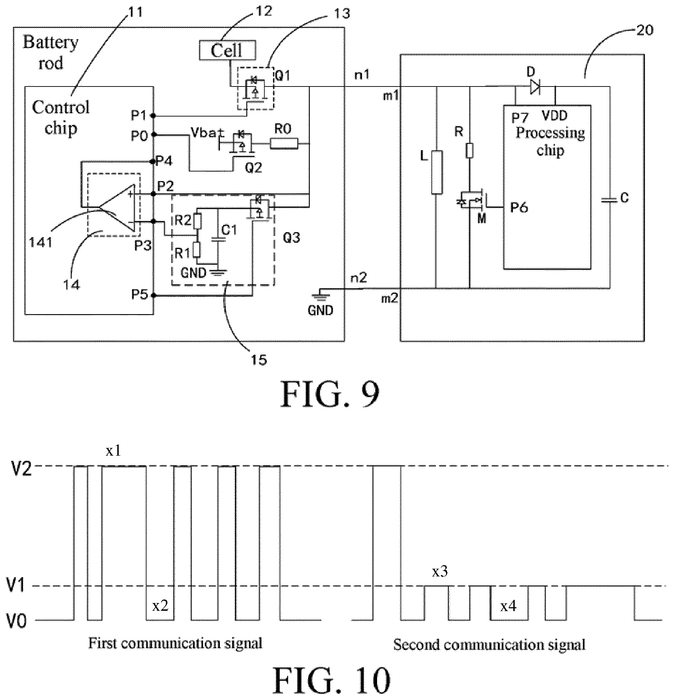

In some embodiments, referring to FIG. 10, in this embodiment, when the atomizer 20 operates in the first state, the voltage on the first connecting end n1 is maintained at the third level signal x3, and the detection pin P2 detects the third level signal x3 in the second communication signal, thereby obtaining the data "1" fed back by the atomizer 20. The voltage value V1 of the third level signal x3 is greater than the voltage value V0 of a second level signal x2 and less than the voltage value V2 of a first level signal x1. When the atomizer 20 operates in the second state, the voltage on the first connecting end n1 is reduced from the voltage value V1 of the third level signal x3 to the voltage value V0 of a fourth level signal x4, and the detection pin P2 detects the fourth level signal x4 in the second communication signal, thereby obtaining the data "0" fed back by the atomizer 20. The voltage value of the fourth level signal x4 is equal to the voltage value of the second level signal x2, which both are the voltage value V0.

As shown in FIG. 8, FIG. 8 is a schematic structural diagram of a second embodiment of an atomizer according to the present disclosure. Compared with the schematic structural diagram of the first embodiment of the atomizer shown in FIG. 3, a difference is that the resistance of the controllable resistor R in the atomizer shown in this embodiment is 0, i.e., the atomizer shown in this embodiment does not include the controllable resistor R. In some embodiments, the atomizer 20 of the present disclosure includes a third connecting end m1 and a fourth connecting end m2 configured to be connected to a battery rod 10 when the atomizer 20 is inserted into the battery rod 10.

The atomizer 20 includes a processing chip 21 connected to the third connecting end m1 to receive a first communication signal from the battery rod 10 and send a second communication signal to the battery rod 10 through the third connecting end m1, thereby realizing communication between the battery rod 10 and the atomizer 20.

The first communication signal includes a first level signal x1 as a logic high level and a second level signal x2 as a logic low level, and the second communication signal includes a third level signal x3 as a logic high level and a fourth level signal x4 as a logic low level. In some embodiments, in this embodiment, the voltage value of the first level signal x1 is V2, the voltage value of the second level signal x2 is V0, the voltage value of the third level signal x3 is V1, and the voltage value of the fourth level signal x4 is V0. The voltage difference (V2-V0) between the voltage value V2 of the first level signal x1 and the voltage value V0 of the second level signal x2 is greater than the voltage difference (V1-V0) between the voltage value V1 of the third level signal x3 and the voltage value V0 of the fourth level signal x4.

In some embodiments, the atomizer 20 further includes a heating element L and a control switch M. The control switch M and the heating element L are connected in parallel between the third connecting end m1 and the fourth connecting end m2, and the control switch M receives a control signal of the processing chip 21 to be in a turn-on state or a turn-off state. When the control switch M is in the turn-off state, the voltage on the third connecting end m1 is maintained at the third level signal x3, in this way, the battery rod 10 obtains data "1" fed back by the atomizer 20. When the control switch M is in the turn-on state, the voltage on the third connecting end m1 is reduced to the fourth level signal x4, in this way, the battery rod 10 obtains data "0" fed back by the atomizer 20.

In some embodiments, the control switch M includes a seventh path end, a eighth path end, and a fourth control end. The fourth control end of the control switch M is connected to a pin P6 of the processing chip 21 and is configured to receive a driving signal to be in the turn-on state or the turn-off state according to the driving signal. A second end of the heating element L is connected to the eighth path end of the control switch M and the fourth connecting end m2, and a first end of the heating element L is connected to the seventh path end of the control switch M and the third connecting end m1.

In some embodiments, the atomizer 20 further includes a diode D. The cathode of the diode D is connected to a voltage pin VDD of the processing chip 21, and the anode of the diode D is connected to a pin P7 of the processing chip 21. In some embodiments, the diode D may also be a metal oxide semiconductor field effect transistor (MOSFET), a triode, or the like. In some embodiments, the atomizer 20 further includes a capacitor C, a first end of the capacitor C is connected to the cathode of the diode D, and a second end of the capacitor C is connected to the fourth connecting end m2.

In some embodiments, the voltage value V2 of the first level signal x1 ranges from VDD to Vbat, VDD is the minimum operating voltage of the processing chip 21 and Vbat is a battery voltage. In some embodiments, the voltage value V1 of the third level signal x3 ranges from 0 to Vbat, the voltage value V0 of the second level signal x2 ranges from 0 to 0.3 * VDD. The voltage value V2 of the first level signal x1 is greater than the voltage value V1 of the third level signal x3, and the voltage value V1 of the third level signal x3 is greater than the voltage value V0 of the second level signal x2, VDD (the voltage at which the processing chip 21 may operate normally) is less than or equal to the Vbat (the battery voltage).

Further, the control switch M, the diode D, and the capacitor C may be integrated into the processing chip 21 to further reduce the costs.

As shown in FIG. 9, FIG. 9 is a schematic structural diagram of an embodiment of an electronic atomizing device formed by inserting the atomizer shown in FIG. 8 into the battery rod shown in FIG. 7. In some embodiments, when the atomizer 20 is inserted into the battery rod 10, the third connecting end m1 of the atomizer 20 is connected to the first connecting end n1 of the battery rod 10, and the fourth connecting end m2 of the atomizer 20 is connected to the second connecting end n2 of the battery rod 10. In another embodiment, when the atomizer 20 is inserted into the battery rod 10, the third connecting end m1 of the atomizer 20 may also be connected to the second connecting end n2 of the battery rod 10, and the fourth connecting end m2 of the atomizer 20 may be connected to the first connecting end n1 of the battery rod 10. This embodiment is illustrated in detail by using an example in which the third connecting end m1 of the atomizer 20 is connected to the first connecting end n1 of the battery rod 10, and the fourth connecting end m2 of the atomizer 20 is connected to the second connecting end n2 of the battery rod 10.

In some embodiments, referring to FIG. 10, FIG. 10 is a time sequence waveform diagram when the battery rod and the atomizer in the electronic atomizing device shown in FIG. 9 communicate with each other. When the atomizer 20 is inserted into the battery rod 10, the battery rod 10 sends the first communication signal to the atomizer 20. In some embodiments, the power supply control pin P1 of the battery rod 10 controls the first switch Q1 to be turned on, and the cell 12 outputs the first level signal x1 (that is, sending the data "1") at the first connecting end n1 through the first switch Q1 that is turned on; or the power supply control pin P1 of the battery rod 10 controls the first switch Q1 to be turned off, and the battery 12 outputs the second level signal x2 (that is, sending the data "0") at the first connecting end n1 through the first switch Q1 that is turned off.

In some embodiments, after the atomizer 20 receives the first communication signal, the battery rod 10 controls the second switch Q2 to be turned on through the current-limiting pin P0, and due to the existence of the current-limiting resistor R0 in the current-limiting circuit 16, the voltage value V2 of the first level signal x1 on the first connecting end n1 is reduced to the voltage value V1 of the third level signal x3. When the processing chip 21 of the atomizer 20 controls the control switch M to be in the turn-off state, the voltage on the third connecting end m1 is maintained at the voltage value V1 corresponding to the third level signal x3, in this way, the battery rod 10 obtains the data " 1" fed back by atomizer 20. The voltage value V1 of the third level signal x3 is greater than the voltage value V0 of the second level signal x2 and less than the voltage value V2 of the first level signal x1. When the processing chip 21 of the atomizer 20 controls the control switch M to be in the turn-on state, the voltage on the third connecting end m1 is reduced to the voltage value V0 corresponding to the fourth level signal x4, in this way, the battery rod 10 obtains the data "0" fed back by the atomizer 20. The voltage value of the fourth level signal x4 is equal to the voltage value of the second level signal x2, that is, the voltage value V0.

In some embodiments, the voltage of a voltage reference Vref may be obtained directly from the first level signal x1 applied to the heating element L. After the first capacitor C1 is fully charged, the third switch Q3 is turned off, and the voltage reference Vref may remain stable for a period of time. In other embodiments, the voltage of the voltage reference Vref may also be obtained from a digital-to-analog converter of the control chip 11, or may be obtained from a battery voltage Vbat, which is not specifically limited herein.

In some embodiments, the voltage value of the voltage reference Vref is greater than the voltage value V0 of the fourth level signal x4 and less than the voltage value V1 of the third level signal x3. Thus, when the voltage obtained through sampling by the detection pin P2 is greater than the voltage reference Vref, it may be determined that the detection pin P2 detects the third level signal x3, that is, the battery rod 10 receives the data "1"; and when the voltage obtained through sampling by the detection pin P2 is less than the voltage reference Vref, it may be determined that the detection pin P2 detects the fourth level signal x4, that is, the battery rod 10 receives the data "0".

In the electronic atomizing device including the atomizer and the battery rod in this embodiment, the voltage value V2 of the first level signal x1 may be reduced to the voltage value V1 of the third level signal x3 due to introducing the current-limiting resistor R0 into the battery rod 10. In this way, the voltage value of the third level signal x3 obtained by the atomizer is low enough, in this way, the voltage difference (V2-V0) between the first level signal x1 and the second level signal x2 is greater than the voltage difference (V1-V0) between the third level signal x3 and the fourth level signal x4. In this case, the current flowing through the control switch M is reduced accordingly. Therefore, a low-power control switch M may be used to reduce the size and the costs of the circuit board of the atomizer.

Only a part of the structure of the electronic atomizing device of the present disclosure is described herein, and the remaining of the structure may be the same as that of an existing electronic atomizing device, which is not described herein again.

The foregoing is merely implementations of the present disclosure but is not intended to limit the patent scope of the present disclosure.

**Claims**

1. A battery rod (10), comprising:

    a first connecting end (n1) and a second connecting end (n2), configured to be connected to an atomizer (20) inserted into the battery rod (10); and
    a control chip (11), connected to the first connecting end (n1), and configured to send a first communication signal to the atomizer (20) inserted into the battery rod (10) through the first connecting end, and receive a second communication signal from the atomizer (20) through the first connecting end (n1), and realize communication between the battery rod (10) and the atomizer (20), **characterised in that**

the first communication signal comprises a first level signal (x1) as a logic high level and a second level signal (x2) as a logic low level, and the second communication signal comprises a third level signal (x3) as a logic high level and a fourth level signal (x4) as a logic low level, and the voltage difference between the first level signal (x1) and the second level signal (x2) is greater than the voltage difference between the third level signal (x3) and the fourth level signal (x4).

2. The battery rod (10) according to claim 1, further comprising:

   a cell (12), configured to provide a battery voltage (Vbat); and
   a first switch (Q1), comprising a first path end, a second path end, and a first control end; wherein the first path end is connected to the cell (12), and the second path end is connected to the first connecting end (n1);
   the control chip (11) comprises a power supply control pin (P1) connected to the first control end to control turn-on and turn-off of the first switch (Q1); when the first switch (Q1) is turned on, the cell (12) outputs the first level signal (x1) at the first connecting end (n1) through the first switch (Q1) that is turned on; and when the first switch (Q1) is turned off, the battery rod (10) outputs the second level signal (x2) at the first connecting end (n1), and sends the first communication signal to the atomizer (20) through the first connecting end (n1).

3. The battery rod (10) according to claim 2, wherein the control chip (11) further comprises:

   a detection pin (P2), connected to the first connecting end (n1) to detect the voltage on the first connecting end (n1);
   wherein the control chip (11) identifies and determines the second communication signal based on the voltage detected by the detection pin (P2).

4. The battery rod (10) according to claim 3, wherein when the battery rod (10) receives the second communication signal from the atomizer (20), the first switch (Q1) is turned on, and the cell (12) outputs the first level signal (x1) at the first connecting end (n1) through the first switch (Q1) that is turned on;

   when the atomizer (20) operates in a first state, the voltage on the first connecting end (n1) is maintained at the first level signal (x1), the detection pin (P2) detects the third level signal (x3) in the second communication signal, and the third level signal (x3) is equal to the first level signal (x1); and
when the atomizer (20) operates in a second state, the voltage on the first connecting end (n1) is reduced to the fourth level signal (x4), the detection pin (P2) detects the fourth level signal (x4) in the second communication signal, and the fourth level signal (x4) is greater than the second level signal (x2) and less than the first level signal (x1).

5. The battery rod (10) according to claim 4, wherein the voltage difference between the voltage on the first connecting end (n1) when the atomizer (20) operates in the first state and the voltage on the first connecting end (n1) when the atomizer (20) operates in the second state is larger than 0 and less than or equal to 1.2V.

6. The battery rod (10) according to claim 3, wherein the battery rod (10) further comprises:

   a current-limiting circuit (16), connected to the first connecting end (n1) to output the third level signal (x3) at the first connecting end (n1) when receiving the second communication signal from the atomizer (20);
   when the atomizer (20) operates in a first state, the voltage on the first connecting end (n1) is maintained at the third level signal (x3), the detection pin (P2) detects the third level signal (x3) in the second communication signal, and the third level signal (x3) is greater than the second level signal (x2) and less than the first level signal (x1); and
   when the atomizer (20) operates in a second state, the voltage on the first connecting end (n1) is reduced to the fourth level signal (x4), the detection pin (P2) detects the fourth level signal (x4) in the second communication signal, and the fourth level signal (x4) is equal to the second level signal (x2).

7. The battery rod (10) according to claim 6, wherein the current-limiting circuit (16) comprises:

   a second switch (Q2), comprising a third path end, a fourth path end, and a second control end; wherein the third path end is connected to the cell (12) to receive the battery voltage (Vbat); and
   a current-limiting resistor (R0), arranged between the fourth path end and the first connecting end (n1);
   wherein the control chip (11) further comprises a current-limiting control pin (P0) connected to the second control end to control turn-on of the second switch (Q2); when the battery rod (10) receives the second communication signal from the atomizer (20), the control chip (11) controls the second switch (Q2) to be turned on through the current-limiting control pin (P0) to output the third level signal (x3) at the first connecting end (n1).

8. The battery rod (10) according to claim 3, wherein the control chip (11) further comprises a signal sampling circuit (14) connected to the detection pin (P2) and receiving a voltage reference (Vref) to identify and determine the second communication signal based on the voltage reference (Vref).

9. The battery rod (10) according to claim 8, wherein the control chip (11) further comprises a voltage reference pin (P3) configured to receive the voltage reference (Vref); and
the battery rod (10) further comprises:
a voltage reference providing circuit (15), arranged between the voltage reference pin (P3) and the first connecting end (n1) to generate the voltage reference (Vref) by using the third level signal (x3) on the first connecting end (n1), wherein the voltage reference (Vref) is less than the third level signal (x3) and greater than the fourth level signal (x4).

10. An atomizer (20), comprising:

a third connecting (m1) end and a fourth connecting end (m2), configured to be connected to a battery rod (10) when the atomizer (20) is inserted into the battery rod (10); and
a processing chip (21), connected to the third connecting end (m1), and configured to receive a first communication signal from the battery rod (10) through the third connecting end (m1) and send a second communication signal to the battery rod (10) through the third connecting end (m1), and realize communication between the battery rod (10) and the atomizer (20);
**characterised in that**
the first communication signal comprises a first level signal (x1) as a logic high level and a second level signal (x2) as a logic low level, and the second communication signal comprises a third level signal (x3) as a logic high level and a fourth level signal (x4) as a logic low level; the voltage difference between the first level signal (x1) and the second level signal (x2) is greater than the voltage difference between the third level signal (x3) and the fourth level signal (x4).

11. The atomizer (20) according to claim 10, further comprising:

a heating element (L); and
a control switch (M) and a controllable resistor (R);
wherein the control switch (M) and the controllable resistor (R) are connected in series and are connected in parallel with the heating element (L) between the third connecting end (m1) and the fourth connecting end (m2), and the control switch (M) receives a control signal of the processing chip (21) to be in a turn-on state or a turn-off state;
when the control switch (M) is in the turn-off state, the atomizer (20) operates in a first state, the voltage on the third connecting end (m1) is maintained at the third level signal (x3), and the third level signal (x3) is equal to the first level signal (x1); and
when the control switch (M) is in the turn-on state, the atomizer (20) operates in a second state, the voltage on the third connecting end (m1) is reduced to the fourth level signal (x4), and the fourth level signal (x4) is greater than the second level signal (x2) and less than the first level signal (x1).

12. The atomizer (20) according to claim 11, further comprising:

a diode (D) and a capacitor (C);
wherein the processing chip (21) comprises a voltage pin (VDD) and a pin (P7); the cathode of the diode (D) is connected to the voltage pin (VDD), and the anode of the diode (D) is connected to the pin (P7); a first end of the capacitor (C) is connected to the cathode, and a second end of the capacitor (C) is connected to the fourth connecting end (m2);
the control switch (M), the controllable resistor (R), the diode (D), and the capacitor (C) are integrated into the processing chip (21).

13. The atomizer (20) according to claim 10, further comprising:

a heating element (L); and
a control switch (M);
wherein the control switch (M) and the heating element (L) are connected in parallel between the third connecting end (m1) and the fourth connecting end, and the control switch (M) receives a control signal of the processing chip (21) to be in a turn-on state or a turn-off state;
when the control switch (M) is in the turn-off state, the voltage on the third connecting end (m1) is maintained at the third level signal (x3), and the third level signal (x3) is greater than the second level signal (x2) and less than the first level signal (x1); and

when the control switch (M) is in the turn-on state, the voltage on the third connecting end (m1) is reduced to the fourth level signal (x4), and the fourth level signal (x4) is equal to the second level signal (x2).

14. The atomizer (20) according to claim 13, further comprising:

a diode (D) and a capacitor (C);
wherein the processing chip (21) comprises a voltage pin (VDD) and a pin (P7); the cathode of the diode (D) is connected to the voltage pin (VDD), and the anode of the diode (D) is connected to the pin (P7); a first end of the capacitor (C) is connected to the cathode, and a second end of the capacitor (C) is connected to the fourth connecting end (m2);
the control switch (M), the diode (D), and the capacitor (C) are integrated into the processing chip (21).

15. An electronic atomizing device, comprising:

the battery rod (10) according to any one of claims 1 to 9; and
the atomizer (20) according to any one of claims 10 to 14.

## Patentansprüche

1. Ein Batteriestab (10), der Folgendes umfasst:

Ein erstes Anschlussende (n1) und ein zweites Anschlussende (n2), die für den Anschluss an einen in den Batteriestab (10) eingefügten Zerstäuber (20) konfiguriert sind; und
ein Steuerchip (11), das an das erste Anschlussende (n1) angeschlossen und konfiguriert ist, um ein erstes Kommunikationssignal an den in den Batteriestab (10) eingefügten Zerstäuber (20) über das erste Anschlussende zu senden und ein zweites Kommunikationssignal vom Zerstäuber (20) über das erste Anschlussende (n1) zu empfangen und die Kommunikation zwischen dem Baterriestab (10) und den Zerstäuber (20) herzustellen, **dadurch gekennzeichnet, dass**
das erste Kommunikationsignal ein Signal des ersten Pegels (x1) als logisch eins und ein Signal des zweite Pegels (x2) als logisch null umfasst, und das zweite Kommunikationssignal ein Signal des dritten Pegels (x3) als logisch eins und ein Signal des vierten Pegels (x4) als logisch null umfasst, und die Spannungsdifferenz zwischen dem Signal des ersten Pegels (x1) und dem Signal des zweiten Pegels (x2) grösser ist als die Spannungsdifferenz zwischen dem Signal des dritten Pegels (x3) und dem Signal des vierten Pegels (x4).

2. Der Batteriestab (10) gemäss Anspruch 1, der weiter eine Zelle (12) umfasst, die konfiguriert ist, um eine Batteriespannung (Vbat) bereitzustellen; und einen ersten Schalter (Q1), der ein erstes Bahnende, ein zweites Bahnende und ein erstes Steuerende umfasst;

wobei das erste Bahnende an die Zelle (12) angeschlossen ist, und das zweite Bahnende mit dem ersten Anschlussende (n1) verbunden ist; der Steuerchip (11) einen Steuerstift (P1) zur Energieversorgung umfasst, der an das erste Steuerende zwecks Kontrolle des An-und-Ausschaltens des ersten Schalters (Q1) angeschlossen ist; wobei, wenn der erste Schalter (Q1) angeschaltet ist, die Zelle (12) das Signal des ersten Pegels (x1) am ersten Anschlussende (n1) über den ersten Schalter (Q1) ausgibt, der eingeschaltet ist; und wenn der erste Schalter (Q1) ausgeschaltet ist, der Batteriestab (10) das Signal des zweiten Pegels (x2) am ersten Anschlussende (n1) ausgibt und das erste Kommunikationsignal über das erste Anschlussende (n1) an den Zertäuber (20) sendet.

3. Der Batteriestab (10) gemäss Anspruch 2, bei dem der Steuerchip (11) weiter Folgendes umfasst:

Einen Erfassungsstift (P2), der an das erste Anschlussende (n1) angeschlossen ist, um die Spannung am ersten Anschlussende (n1) festzustellen;
wobei der Steuerchip (11) das zweite Kommunikationssignal basierend auf der durch den Erfassungsstift (P2) festgestellten Spannung identifiziert und bestimmt.

4. Der Batteriestab (10) gemäss Anspruch 3, wobei, wobei wenn der Battriestab (10) das zweite Kommunikationssignal vom Zerstäuber (20) erhält, der erste Schalter (Q1) eingeschaltet wird, und die Zelle ((12) das Signal des ersten Pegels (x1) am ersten Anschlussende (n1) durch den ersten, eingeschalteten Schalter (Q1) ausgibt;

wenn der Zerstäuber (20) in einem ersten Zustand arbeitet, die Spannung am ersten Anschlussende (n1) beim Signal des ersten Pegels (x1) beibehalten wird, der Erfassungsstift (P2) das Signal des dritten Pegels (x3) im zweiten Kommunikationssigna erkennt, und das Signal des dritten Pegels (x3) gleich dem Signal des ersten Pegels (x1) ist; und
wenn der Zerstäuber (20) in einem zweiten Zustand arbeitet, die Spannung am ersten Anschlussende (n1) auf das Signal des vierten Pegels (x4) reduziert wird, der Erfassungsstift (P2) das Signal des vierten Pegels (x4) im zweiten Kommunikationssignal erkennt und das Signal des vierten Pegels (x4) grösser ist als das Signal des zweiten Pegels (x2) und geringer als das Signal des ersten Pegels (x1).

5. Der Batteriestab (10) gemäss Anspruch 4, bei dem der Spannungsunterschied zwischen der Spannung am ersten Anschlussende (n1), wenn der Zerstäuber (20) im ersten Zustand arbeitet, und der Spannung am ersten Anschlussende (n1), wenn der Zerstäuber (20) im zweiten Zustand arbeitet, grösser ist als 0 und geringer oder gleich 1,2 V.

6. Der Batteriestab (10) gemäss Anspruch 3, wobei der Batteriestab (10) weiter Folgendes umfasst:

   Eine Strombegrenzungsschaltung (16), der am ersten Anschlussende (n1) angeschlossen ist, um das Signal des dritten Pegels (x3) am ersten Anschlussende (n1) auszugeben, wenn vom Zerstäuber (20) das zweite Kommunikationssignal eintrifft;
   wobei wenn der Zerstäuber (20) in einem ersten Zustand arbeitet, die Spannung am ersten Anschlussende (n1) beim Signal des dritten Pegels (x3) beibehalten wird, der Erfassungsstift (P2) das Signal des dritten Pegels (x3) im zweiten Kommunikationssignal erkennt, und das Signal des dritten Pegels (x3) grösser ist als das Signal des zweiten Pegels (x2) und geringer als das Signal des ersten Pegels (x1); und
   wenn der Zerstäuber (20) im zweiten Zustand arbeitet, die Spannung am ersten Anschlussende (n1) auf das Signal des vierten Pegels (x4) reduziert wird, der Erfassungsstift (P2) das Signal des vierten Pegels (x4) im zweiten Kommunikationssignal erkennt, und das Signal des vierte Pegels (x4) gleich dem Signal des zweiten Pegels (x2) ist.

7. Der Batteriestab (10) gemäss Anspruch 6, bei dem die Strombegrenzungsschaltung (16) Folgendes umfasst:

   Einen zweiten Schalter (Q2), der ein drittes Bahnende, ein viertes Bahnende und ein zweites Steuerende umfasst; wobei das dritte Bahnende an die Zelle (12) angeschlossen ist, um die Batteriespannung (Vbat) zu empfangen; und
   einen Strombegrenzungswiderstand (R0), der zwischen dem vierten Bahnende und dem ersten Anschlussende (n1) angeordnet ist; und
   wobei der Steuerchip (11) weiter einen Strombegrenzungssteuerstift (P0) umfasst, der an das zweite Steuerende angeschlossen ist, um das Anschalten des zweiten Schalters (Q2) zu steuern; wobei wenn der Batteriestab (10) das zweite Kommunikationssignal vom Zerstäuber (20) empfängt, der Steuerchip (11) den zweiten Schalter (Q2) steuert, der durch den Strombegrenzungssteuerstift (P0) eingeschaltet werden soll, um das Signal des dritten Pegels (x3) am ersten Anschlussende (n1) auszugeben,

8. Der Batteriestab (10) gemäss Anspruch 3, bei dem der Steuerchip (11) weiter eine Signalabtastschaltung (14) unmfasst, der an den Erfassungsstift (P2) angeschlossen ist, und eine Spannungsreferenz (Vref) empfängt, um das zweite auf der Spannungsreferenz (Vref) basierende Kommunikationssignal zu identifizieren und bestimmen.

9. Der Batteriestab (10) gemäss Anspruch 8, bei dem der Steuerchip (11) weiter einen Spannungsreferenzstift (P3) umfasst, der konfiguriert ist, um die Spannungsreferenz (Vref) zu empfangen; und wobei der Batteriestift (10) weiter Folgendes umfasst:
   eine Bereitstellungsschaltung (15) für die Spannungsreferenz, der zwischen dem Spannungsrefernzstift (P3) und dem ersten Anschlussende (n1) angeordnet ist, um die Spannungsreferenz (Vref) zu erzeugen, indem das Signal des dritten Pegels (x3) am ersten Anschlussende (n1) benutzt wird, wobei die Spannungsreferenz (Vref) geringer ist als das Signal des dritten Pegels (x3) und grösser als das Signal des vierten Pegels (x4).

10. Ein Zerstäuber (20), der Folgendes umfasst:

    Ein drittes Anschlussende (m1) und ein viertes Anschlussende (m2), die konfiguriert sind, um an einen Batteriestab (10) angeschlossen zu werden, wenn der Zerstäuber in den Batteriestab (10) eingeführt wird; und
    ein Verarbeitungschip (21), der an das dritte Anschlussende (m1) angeschlossen und konfiguriert ist, um ein erstes Kommunikationssignal vom Batteriestab (10) über das dritte Anschlussende (m1) zu erhalten und ein zweites Kommunikationssignal an den Batteriestab (10) über das dritte Anschlussende (m1) zu senden und die Kommunikation zwischen dem Batteriestab (10) und den Zerstäuber (20) herzustellen;
    **dadurch gekennzeichnet dass**,
    das erste Kommunikationsignal ein Signal des ersten Pegels (x1) als logisch eins und ein Signal des zweiten Pegels (x2) als logisch null umfasst, und das zweite Kommunikationsignal ein Signal des dritten Pegels (x3) als logisch eins und ein Signal des vierten Pegels (x4) als logisch null umfasst; wobei der Spannungsunterschied zwischen dem Signal des ersten Pegels (x1) und dem Signal des zweiten Pegels (x2) grösser ist als der Spannungsunterschied zwischen dem Signal des dritten Pegelsl (x3) und dem Signal des vierten Pegels (x4).

11. Der Zerstäuber (20) gemäss Anspruch 10, der weiter Folgendes umfasst:

Ein Heizelement (L); und
einen Steuerschalter (M) und einen steuerbaren Widerstand (R)
wobei der Betätigungsschalter (M) und der steuerbare Widerstand (R) reihengeschaltet und parallel an das Heizelement (L) zwischen dem dritten Anschlussende (m1) und dem vierten Anschlussende (m2) angeschlossen sind, und der Betätigungsschalter (M) vom Verarbeitungschip (21) ein Steuersignal erhält, dass er im angeschalteten Zustand oder abgeschalteten Zustand sein muss;
wenn der Betätigungsschalter (M) sich im abgeschalteten Zustand befindet, arbeitet der Zerstäuber (20) in einem ersten Zustand, wird die Spannung am dritten Anschlussende (m1) beim Signal des dritten Pegels (x3) beibehalten und das Signal des dritten Pegels (x3) ist gleich dem Signal des ersten Pegels (x1); und
wenn der Betätigungsschalter (M) sich im angeschalteten Zustand befindet, arbeitet der Zerstäuber (20) in einem zweiten Zustand, wird die Spannung am dritten Anschlussende (m1) auf das Signal des vierten Pegels (x4) reduziert und das Signal des vierten Pegels (x4) ist grösser als das Signal des zweiten Pegels (x2) und geringer als das Signal des ersten Pegels (x1).

12. Der Zerstäuber (20) gemäss Anspruch 11, der Folgendes umfasst:

Eine Diode (D) und einen Kondensator (C);
Wobei der Verarbeitungschip (21) einen Spannungsstift (VDD) und einen Stift (P7) umfasst;
die Kathode der Diode (D) an den Spannungsstift (VDD) angeschlossen ist, und die Anode der Diode (D) an den Stift (P7) angeschlossen ist; ein erstes Ende des Kondensators (C) mit der Kathode und das zweite Ende des Kondensators (C) mit dem vierten Anschlussende (m2) verbunden ist;
wobei der Betätigungsschalter (M), der steuerbare Widerstand (R), die Diode (D) und der Kondensator (C) im Verarbeitungschip (21) integriert sind.

13. Der Zerstäuber (20) gemäss Anspruch 10, der weiter Folgendes umfasst:

Ein Heizelement (L); und
einen Betätigungsschalter (M);
wobei der Betätigungsschalter (M) und das Heizelement (L) parallel zwischen dem dritten Anschlussende (m1) und dem vierten Anschlussende geschaltet sind, und der Steuerschalter (M) ein Steuersignal vom Verarbeitungschip (21) erhält, dass er sich im angeschalteten Zustand oder abgeschalteten Zustand befinden muss;
wenn der Betätigungsschalter (M) sich im abgeschalteten Zustand befindet, die Spannung am dritten Ansclussende (m1) beim Signal des dritten Pegels (x3) beibehalten wird und das Signal des dritten Pegels (x3) grösser ist als das Signal des zweiten Pegels (x2) und geringer als das Signal des ersten Pegels (x1); und
wenn der Betätigungsschalter (M) sich im angeschalteten Zustand befindet, die Spannung am dritten Anschlussende (m1) auf das Signal des vierten Pegels (x4) reduziert wird und das Signal des vierten Pegels (x4) gleich dem Signal des zweiten Pegels (x2) ist.

14. Der Zerstäuber (20) gemäss Anspruch 13, der weiter Folgendes umfasst:

Eine Diode (D) und einen Kondensator (C);
wobei der Verarbeitungschip (21) einen Spannungsstift (VDD) und einen Stift (P7) umfasst;
die Kathode der Diode (D) an den Spannungsstift (VDD) angeschlossen ist und die Anode der Diode (D) mit dem Stift (P7) verbunden ist; ein erstes Ende des Kondensators (C) mit der Kathode und ein zweites Ende des Kondensators (C) mit dem vierten Anschlussende (m2) verbunden ist;
wobei der Betätigungsschalter (M), die Diode (D) und der Kondensator (C) im Verarbeitungschip (21) integriert sind.

15. Eine elektronische Zerstäubungsvorrichtung, die Folgendes umfast:

Einen Batteriestab (10) gemäss irgendeinem der Ansprüche 1 bis 9; und
den Zerstäuber (20) gemäss irgendeinem der Ansprüche 10 bis 14.

**Revendications**

1. Une barre de batterie (10), comprenant :

une première extrémité de connexion (n1) et une deuxième extrémité de connexion (n2), configurées pour être connectées à un atomiseur (20) inséré dans la barre de batterie (10) ; et

une puce de commande (11), connectée à la première extrémité de connexion (n1), et configurée pour envoyer un premier signal de communication à l'atomiseur (20) inséré dans la barre de batterie (10) via la première extrémité de connexion, et pour recevoir un deuxième signal de communication de l'atomiseur (20) via la première extrémité de connexion (n1), et pour établir une communication entre la barre de batterie (10) et l'atomiseur (20), **caractérisée en ce que** le premier signal de communication comprend un signal de premier niveau (x1) comme niveau logique haut et un signal de deuxième niveau (x2) comme niveau logique bas, et le deuxième signal de communication comprend un signal de troisième niveau (x3) comme niveau logique haut et un signal de quatrième niveau (x4) comme niveau logique bas, et la différence de voltage entre le signal de premier niveau (x1) et le signal de deuxième niveau (x2) est plus grande que la différence de voltage entre le signal de troisième niveau (x3) et le signal de quatrième niveau (x4).

2. La barre de batterie (10) selon la revendication 1, comprenant en outre :

   une batterie (12), configurée pour fournir une tension de batterie (Vbat) ; et
   un premier interrupteur (Q1), comprenant une première extrémité de circuit, une deuxième extrémité de circuit et une première extrémité de commande ;
   où la première extrémité du circuit est connectée à la batterie (12), et la deuxième extrémité du circuit est connectée à la première extrémité de connexion (n1) ;
   la puce de commande (11) comprend une broche de commande d'alimentation (P1) connectée à la première extrémité de commande pour contrôler l'activation et la désactivation du premier interrupteur (Q1) ; lorsque le premier interrupteur (Q1) est activé, la batterie (12) émet le signal de premier niveau (x1) à la première extrémité de connexion (n1) via le premier interrupteur (Q1) qui est activé ; et lorsque le premier interrupteur (Q1) est désactivé, la barre de batterie (10) émet le signal de deuxième niveau (x2) à la première extrémité de connexion (n1) et envoie le premier signal de communication à l'atomiseur (20) via la première extrémité de connexion (n1).

3. La barre de batterie (10) selon la revendication 2, dans laquelle la puce de commande (11) comprend en outre :

   une broche de détection (P2), connectée à la première extrémité de connexion (n1) pour détecter le voltage sur la première extrémité de connexion (n1) ;
   où la puce de commande (11) identifie et détermine le second signal de communication sur la base du voltage détecté par la broche de détection (P2).

4. La barre de batterie (10) selon la revendication 3, dans laquelle lorsque la barre de batterie (10) reçoit le second signal de communication provenant de l'atomiseur (20), le premier interrupteur (Q1) est activé, et la batterie (12) émet le signal de premier niveau (x1) à la première extrémité de connexion (n1) via le premier interrupteur (Q1) qui est activé ;

   lorsque l'atomiseur (20) fonctionne dans un premier état, le voltage sur la première extrémité de connexion (n1) est maintenu au signal de premier niveau (x1), la broche de détection (P2) détecte le signal de troisième niveau (x3) dans le deuxième signal de communication, et le signal de troisième niveau (x3) est égal au signal de premier niveau (x1) ; et
   lorsque l'atomiseur (20) fonctionne dans un deuxième état, le voltage sur la première extrémité de connexion (n1) est réduit au signal de quatrième niveau (x4), la broche de détection (P2) détecte le signal de quatrième niveau (x4) dans le deuxième signal de communication, et le signal de quatrième niveau (x4) est plus élevé que le signal de deuxième niveau (x2) et moins élevé que le signal de premier niveau (x1).

5. La barre de batterie (10) selon la revendication 4, dans laquelle la différence de voltage entre le voltage sur la première extrémité de connexion (n1) lorsque l'atomiseur (20) fonctionne dans le premier état et le voltage sur la première extrémité de connexion (n1) lorsque l'atomiseur (20) fonctionne dans le second état est plus élevé que 0 et inférieur ou égal à 1,2V.

6. La barre de batterie (10) selon la revendication 3, dans laquelle la barre de batterie (10) comprend en outre :

   un circuit de limitation de courant (16), connecté à la première extrémité de connexion (n1) pour émettre le signal de troisième niveau (x3) à la première extrémité de connexion (n1) lors de la réception du deuxième signal de communication de l'atomiseur (20) ;
   lorsque l'atomiseur (20) fonctionne dans un premier état, la tension sur la première extrémité de connexion (n1) est maintenue sur le signal de troisième niveau (x3), la broche de détection (P2) détecte le signal de troisième niveau (x3) dans le deuxième signal de communication, et le signal de troisième niveau (x3) est plus élevé que le signal de deuxième niveau (x2) et moins élevé que le signal de premier niveau (x1) ; et lorsque l'atomiseur (20) fonctionne dans un deuxième état, le voltage sur la première extrémité de connexion (n1) est réduit au signal de quatrième niveau (x4), la broche de détection (P2) détecte le signal de quatrième niveau (x4) dans le deuxième signal de communication, et le signal de quatrième niveau (x4) est égal au signal de deuxième niveau (x2).

7. La barre de batterie (10) selon la revendication 6, dans laquelle le circuit de limitation de courant (16) comprend :

un deuxième interrupteur (Q2), comprenant une troisième extrémité de circuit, une quatrième extrémité de circuit et une deuxième extrémité de commande, dans lequel la troisième extrémité de circuit est connectée à la batterie (12) pour recevoir la tension de la batterie (Vbat) ; et une résistance de limitation de courant (RO), disposée entre la quatrième extrémité du circuit et la première extrémité de connexion (n1) ; où la puce de commande (11) comprend en outre une broche de commande de limitation de courant (PO) connectée à la deuxième extrémité de commande pour commander la mise en marche du deuxième interrupteur (Q2) ; lorsque la barre de batterie (10) reçoit le deuxième signal de communication provenant de l'atomiseur (20), la puce de commande (11) commande l'activation du deuxième interrupteur (Q2) via la broche de commande de limitation de courant (PO) pour émettre le signal de troisième niveau (x3) sur la première extrémité de connexion (n1).

8. La barre de batterie (10) selon la revendication 3, dans laquelle la puce de commande (11) comprend en outre un circuit d'échantillonnage de signaux (14) connecté à la broche de détection (P2) et recevant une référence de voltage (Vref) pour identifier et déterminer le second signal de communication sur la base de la référence de voltage (Vref).

9. La barre de batterie (10) selon la revendication 8, dans laquelle la puce de commande (11) comprend en outre une broche de référence de voltage (P3) configurée pour recevoir la référence de tension (Vref) ; et la barre de batterie (10) comprend en outre :
un circuit fournissant la référence de voltage (15), disposé entre la broche de référence de voltage (P3) et la première extrémité de connexion (n1) pour générer la référence de voltage (Vref) en utilisant le signal de troisième niveau (x3) sur la première extrémité de connexion (n1), où la référence de voltage (Vref) est moins élevée que le signal de troisième niveau (x3) et plus élevée que le signal de quatrième niveau (x4).

10. Un atomiseur (20), comprenant :

une troisième extrémité de connexion (m1) et une quatrième extrémité de connexion (m2), configurées pour être connectées à une barre de batterie (10) lorsque l'atomiseur (20) est inséré dans la barre de batterie (10) ; et une puce de traitement (21), connectée à la troisième extrémité de connexion (m1), et configurée pour recevoir un premier signal de communication provenant de la barre de batterie (10) à travers la troisième extrémité de connexion (m1) et envoyer un second signal de communication à la barre de batterie (10) à travers la troisième extrémité de connexion (m1), et établir une communication entre la barre de batterie (10) et l'atomiseur (20) ;
**caractérisé en ce que**
le premier signal de communication comprend un signal de premier niveau (x1) comme niveau logique haut et un signal de deuxième niveau (x2) comme niveau logique bas, et le deuxième signal de communication comprend un signal de troisième niveau (x3) comme niveau logique haut et un signal de quatrième niveau (x4) comme niveau logique bas ; la différence de voltage entre le signal de premier niveau (x1) et le signal de deuxième niveau (x2) est plus élevée que la différence de voltage entre le signal de troisième niveau (x3) et le signal de quatrième niveau (x4).

11. L'atomiseur (20) selon la revendication 10, comprenant en outre :

un élément chauffant (L) ; et un interrupteur de commande (M) et une résistance contrôlable (R) ;
L'interrupteur de commande (M) et la résistance contrôlable (R) sont connectés en série et en parallèle avec l'élément chauffant (L) entre la troisième extrémité de connexion (m1) et la quatrième extrémité de connexion (m2), et l'interrupteur de commande (M) reçoit un signal de commande provenant de la puce de traitement (21) pour être dans un état activé ou désactivé ; lorsque l'interrupteur de commande (M) est à l'état de désactivation, l'atomiseur (20) fonctionne dans un premier état, le voltage sur la troisième extrémité de connexion (m1) est maintenu sur le signal de troisième niveau (x3), et le signal de troisième niveau (x3) est égal au signal de premier niveau (x1) ; et lorsque l'interrupteur de commande (M) est à l'état activé, l'atomiseur (20) fonctionne dans un deuxième état, la tension sur la troisième extrémité de connexion (m1) est réduite au signal de quatrième niveau (x4), et le signal de quatrième niveau (x4) est plus élevé que le signal de deuxième niveau (x2) et moins élevé que le signal de premier niveau (x1).

**12.** L'atomiseur (20) selon la revendication 11, comprenant en outre :

une diode (D) et un condensateur (C) ;
où la puce de traitement (21) comprend une broche de tension (VDD) et une broche (P7) ; la cathode de la diode (D) est connectée à la broche de tension (VDD), et l'anode de la diode (D) est connectée à la broche (P7) ; une première extrémité du condensateur (C) est connectée à la cathode, et une deuxième extrémité du condensateur (C) est connectée à la quatrième extrémité de connexion (m2) ;
l'interrupteur de commande (M), la résistance contrôlable (R), la diode (D) et le condensateur (C) sont intégrés dans la puce de traitement (21).

**13.** L'atomiseur (20) selon la revendication 10, comprenant en outre :

un élément chauffant (L) ; et
un interrupteur de commande (M) ;
L'interrupteur de commande (M) et l'élément chauffant (L) sont connectés en parallèle entre la troisième extrémité de connexion (m1) et la quatrième extrémité de connexion, et l'interrupteur de commande (M) reçoit un signal de commande provenant de la puce de traitement (21) pour être dans un état activé ou désactivé ;
lorsque l'interrupteur de commande (M) est à l'état désactivé, le voltage sur la troisième extrémité de connexion (m1) est maintenu sur le signal de troisième niveau (x3), et le signal de troisième niveau (x3) est plus élevé que le signal de deuxième niveau (x2) et moins élevé que le signal de premier niveau (x1) ; et
lorsque l'interrupteur de commande (M) est à l'état activé, le voltage sur la troisième extrémité de connexion (m1) est réduit au signal de quatrième niveau (x4), et le signal de quatrième niveau (x4) est égal au signal de deuxième niveau (x2).

**14.** L'atomiseur (20) selon la revendication 13, comprenant en outre :

une diode (D) et un condensateur (C) ;
où la puce de traitement (21) comprend une broche de tension (VDD) et une broche (P7) ; la cathode de la diode (D) est connectée à la broche de tension (VDD), et l'anode de la diode (D) est connectée à la broche (P7) ; une première extrémité du condensateur (C) est connectée à la cathode, et une deuxième extrémité du condensateur (C) est connectée à la quatrième extrémité de connexion (m2) ;
l'interrupteur de commande (M), la diode (D) et le condensateur (C) sont intégrés dans la puce de traitement (21).

**15.** Dispositif électronique d'atomisation, comprenant :

la barre de batterie (10) selon une quelconque des revendications 1 à 9 ;
et l'atomiseur (20) selon une quelconque des revendications 10 à 14.

FIG. 1

FIG. 2

FIG. 3

FIG. 4

First communication signal          Second communication signal

# FIG. 5

# FIG. 6

FIG. 7

FIG. 8

FIG. 9

First communication signal          Second communication signal

FIG. 10

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 104432534 A